# EUROPÄISCHE PATENTANMELDUNG

(11) **EP 4 733 168 A1**
(43) Veröffentlichungstag der Anmeldung: **29.04.2026**
(21) Anmeldenummer: 24208947.2
(22) Anmeldetag: 25.10.2024
(51) Int. Cl.: B61D 3/18, B61D 3/20, B65D 88/12, B60P 3/077, B61D 45/00, B65D 88/54

(54) **CONTAINER MIT RADSTOPPERN ZUR SICHERUNG VON FAHRZEUGEN AUF EINER PLATTFORM**

(71) Anmelder: Pieringer, Peter Jonathan, 8010 Graz (AT); Petschner, Gerald, 8010 Graz (AT)
(72) Erfinder: Pieringer, Peter Jonathan, 8010 Graz (AT); Petschner, Gerald, 8010 Graz (AT)
(74) Vertreter: Schwarz & Partner Patentanwälte GmbH

(57) **Zusammenfassung**

Die Erfindung betrifft einen Container (1) mit zumindest zwei Fahrspuren (6) zur Aufnahme eines Fahrzeuges, wobei der Container (1) zumindest einen, bevorzugt zumindest zwei, erste Radstopper (5) und zumindest einen, bevorzugt zumindest zwei, zweite Radstopper (4) zur Sicherung von Fahrzeugen auf den Fahrspuren (6) umfasst, wobei auf zumindest einer oder zumindest zwei der Fahrspuren (6) genau ein erster Radstopper (5) und genau ein zweiter Radstopper (4) vorliegt, wobei der zumindest eine erste Radstopper (5) einen Gleitbock (8) mit zumindest einem ersten Loch (12) und einem zweiten Loch (13), einen am Gleitbock (8) veschwenkbar gelagerten Ausleger (9) und eine Stützstrebe (10) umfasst, wobei die Stützstrebe (10) mit einem Ende verschwenkbar am Ausleger (9) gelagert ist und am anderen Ende einen Sicherungsbolzen (16) aufweist, der in das erste Loch (12) und in das zweite Loch (13) einführbar ist, und wobei der zumindest eine zweite Radstopper (4) eine semipermanente Querstange (22) umfasst.

## Beschreibung

Die Erfindung betrifft einen Container mit Radstoppern zur Sicherung von Fahrzeugen auf einer Plattform, insbesondere auf Fahrspuren eines Containers oder eines schienengebundenen Fahrzeugs.

Im Stand der Technik werden zur Sicherung von Fahrzeugen auf Autozügen oder Autotransportzügen häufig Spanngurte, Keile oder mechanische Feststellvorrichtungen eingesetzt. Diese Systeme sollen verhindern, dass die Fahrzeuge während des Transports aufgrund von Erschütterungen, Kurvenfahrten oder Bremsmanövern verrutschen. Besonders auf schienengebundenen Fahrzeugen sind stabile und verlässliche Sicherungslösungen erforderlich, da plötzliche Bewegungen und äußere Einflüsse das Fahrzeug gefährden können. Die aktuell gebräuchlichsten Systeme basieren auf einer Kombination aus mechanischer Fixierung und Reibungselementen, die durch Anpressdruck das Fahrzeug an Ort und Stelle halten.

Eine weitere gängige Lösung sind Schienensysteme oder Führungsschienen, die das Fahrzeug in eine bestimmte Position bringen, bevor es gesichert wird. Diese Systeme sind meist an die spezifische Architektur des Zuges angepasst und ermöglichen eine präzise Platzierung der Fahrzeuge auf der Plattform. Dennoch bleibt die Herausforderung bestehen, eine verlässliche und gleichzeitig einfach handhabbare Sicherung zu bieten, die den Transport effizient und sicher gestaltet.

Verschwenkbare und entlang einer Schiene verschiebliche Ausleger sind in den Schriften EP2307237B1 und EP0437413B1 offenbart. Diese Konstruktionen sind jedoch mechanisch äußerst kompliziert und fehleranfällig.

Ein Klemmmechanismus, der das Rad eines Fahrzeugs bei einem Querversatz hindern soll, ist in der GB964933A dargestellt.

Ausleger, die mittels einer Stützstrebe auf Löchern einer Schiene befestigbar ist, sind in den Schriften DE4119480A1, DE102007004519B4, DE102019201807, FR2376017A1A1 und WO2020168615A1 offenbart.

Die bislang unveröffentlichte PCT/EP2024/061018 beschreibt eine moderne Weiterentwicklung, bei welcher Fahrzeuge nicht auf dedizierten Autotransportzügen transportiert werden, sondern auf Containern, die in ihren Maßen ISO-Containern gleichen, aber speziell für den Fahrzeugtransport konzipiert sind. Da dieser Container wahlweise auf einem schienengebundenen Fahrzeug und wahlweise auf einem Anhänger eines LWKs transportiert werden soll, müssen die Anforderungen an die Befestigung des Fahrzeugs einerseits den Anforderungen im Schienenverkehr als auch den Anforderungen im Straßenverkehr entsprechen. Diese Anforderungen sind jedoch oft nicht kompatibel, da z.B. im Schienenverkehr gefordert wird, dass die Fahrzeuge mit Sicherungen in Querrichtung fixiert werden sollen, wohingegen im Straßenverkehr auch gegen Querkräfte gesichert werden muss.

Es ist daher die Aufgabe der Erfindung, einen Container mit verbesserter Fahrzeugsicherung bereitzustellen, welche die genannten Anforderungen erfüllt.

Dieses Ziel wird mit einem Container mit zumindest zwei Fahrspuren zur Aufnahme eines Fahrzeuges erreicht, wobei der Container zumindest einen, bevorzugt zumindest zwei, erste Radstopper und zumindest einen, bevorzugt zumindest zwei, zweite Radstopper zur Sicherung von Fahrzeugen auf den Fahrspuren umfasst, wobei auf zumindest einer oder zumindest zwei der Fahrspuren genau ein erster Radstopper und genau ein zweiter Radstopper vorliegt,
- wobei der zumindest eine erste Radstopper einen Gleitbock mit zumindest einem ersten Loch und einem zweiten Loch, einen am Gleitbock veschwenkbar gelagerten Ausleger und eine Stützstrebe umfasst, wobei die Stützstrebe mit einem Ende verschwenkbar am Ausleger gelagert ist und am anderen Ende einen Sicherungsbolzen aufweist, der in das erste Loch und in das zweite Loch einführbar ist,
- wobei der Ausleger in einem Winkel von im Wesentlichen 90° vom Gleitbock absteht, wenn der Sicherungsbolzen in das erste Loch eingeführt ist und in einem Winkel von 30° bis 60° vom Gleitbock absteht, wenn der Sicherungsbolzen in das zweite Loch eingeführt ist, und
- wobei der zumindest eine zweite Radstopper zwei Aufnahmeleisten und eine Querstange umfasst, wobei die Aufnahmeleisten jeweils an gegenüberliegenden Seiten einer Fahrspur vorliegen, und wobei die Querstange mit einem ersten Ende an einer der Aufnahmeleisten und mit einem zweiten Ende an der anderen Aufnahmeleiste arretierbar ist.

Diese erfindungsgemäße Lösung schafft einen neuartigen Container, bei dem ein "Durchfahren" der Fahrzeuge durch die Fahrspuren nicht einfach möglich ist, da die zweiten Radstopper semi-permanent ausgeführt sind und nur verstellt werden, wenn die Fahrzeugsicherung an eine andere Länge eines Fahrzeugs angepasst wird, was über die gesamte Lebensdauer des Containers in der Regel jedoch nur wenige Male erfolgt. Gleichzeitig wird jedoch das "Einfahren" eines Fahrzeuges in den Container rasch ermöglicht, da die ersten Radstopper verschwenkbar ausgeführt sind und durch den verschwenkbaren Ausleger leicht geöffnet und geschlossen werden können.

Die ersten Radstopper haben zudem den besonderen Vorteil, dass sie sich insbesondere zur Sicherung von Fahrzeugen im kombinierten Verkehr eignen, wo das Fahrzeug wahlweise auf der Schiene oder auf der Straße transportiert werden soll, wo jeweils andere Anforderungen an die Radstopper gelten. Insbesondere kann der Ausleger des ersten Radstoppers schnell verschwenkt werden, indem der Sicherungsbolzen vom ersten Loch in das zweite Loch, oder umgekehrt, geführt wird. Dadurch kann der erste Radstopper rasch an die jeweilige Transportsituation angepasst werden, ohne dass der erste Radstopper ausgetauscht werden muss.

Dadurch, dass der Ausleger in einen Winkel von 30° bis 60° gebracht werden kann, kann dieser schräg an ein Rad des Fahrzeugs angelegt werden, sodass nicht nur ein Rollen bzw. "nach vorne"-Versetzen oder "nach hinten"-Versetzen des Fahrzeugs unterbunden werden kann, sondern auch ein seitliches Versetzen, wie es insbesondere vorkommen kann, wenn das Fahrzeug auf einer Straße transportiert wird. Eine Lösung wie bei der DE4119480A1, wo der Ausleger nur um ca. 15° verstellt wird, um den Ausleger an einen Radstand des Fahrzeugs anzupassen, würde hingegen nicht ausreichend sein, um die im Straßenverkehr auftretenden Querkräfte aufzunehmen.

Der genannte erste Radstopper ist aufgrund des verschwenkbaren Auslegers insbesondere dazu ausgelegt, auch von der Fahrspur weggeschwenkt zu werden, sodass dieser flexibel eingesetzt werden kann und auch zum Sichern von allen vier Rädern eines Fahrzeugs eingesetzt werden kann. Als zweiter Radstopper, durch den das Fahrzeug nicht "hindurch" fahren muss, wird ein anderer Radstopper ohne rasch verschwenkbare Elemente eingesetzt. Insbesondere werden zumindest ein, bevorzugt zumindest zwei, zweite Radstopper vorgesehen, der bzw. die jeweils zwei Aufnahmeleisten und eine Querstange umfassen, wobei die Aufnahmeleisten jeweils an gegenüberliegenden Seiten einer Fahrspur vorliegen, wobei die Querstange mit einem ersten Ende an einer der Aufnahmeleisten und mit einem zweiten Ende an der anderen Aufnahmeleiste arretierbar ist. Die Querstange liegt während des Beladevorgangs eines Fahrzeugs unverändert vor und wird nur versetzt, wenn man den bzw. die zweiten Radstopper an die Länge des Fahrzeugs anpassen muss. Es kann somit davon gesprochen werden, dass die Querstange semi-permanent vorliegt.

Es kann zusammengefasst werden, dass sich die Erfindung durch die besondere Auswahl an Radstoppern auszeichnet, um einen Container zu schaffen, der besonders rasch beladen werden kann, wobei die Anzahl der beweglichen Teile auf ein Minimum reduziert wurde, um technische Fehlfunktionen, aber auch Diebstahl der entfernbaren Einzelteile, so weit wie möglich zu reduzieren.

In einer besonders bevorzugten Ausführungsform sind auf jeder Fahrspur genau ein erster Radstopper und ein zweiter Radstopper vorgesehen. Dadurch kann der zweite Radstopper eine semi-permanenten Begrenzung für das Vorderrad bilden. Der erste Radstopper kann für das Auffahren des Fahrzeugs auf den Container weggeschwenkt oder entfernt sein und in Position gebracht werden (entweder mit einem Winkel des Auslegers von 90° oder von 30° bis 60° relativ zum Gleitbock), sobald das Fahrzeug auf den Container aufgefahren ist und mit dem Vorderrad am zweiten Radstopper ansteht. Der erste Radstopper und der zweite werden derart positioniert, dass sich das Fahrzeug zwischen ihnen befindet. Es ist ausreichend, wenn sich der erste Radstopper und der zweite Radstopper auf einer der Fahrspuren befinden, d.h. eine Seite des Fahrzeugs wird ohne Radstopper vorgesehen. Bevorzugt befinden sich jedoch auf jeder der Fahrspuren, auf denen ein Fahrzeug steht, genau ein erster Radstopper und ein zweiter Radstopper. Es ist ersichtlich, dass sich bei einem Container, bei dem genau ein Fahrzeug pro Ebene vorgesehen ist (was z.B. bei einem Container mit einer Länge von 20 Fuß erfüllt sein wird) eine besondere Synergie zwischen dem ersten Radstopper und dem zweiten Radstopper ergibt, da der zweite Radstopper für den Auffahrvorgang des Fahrzeugs unveränderbar vorliegen kann und nur der erste Radstopper mit Gleitbock manuell in Position gebracht wird. Der Container kann daher besonders rasch beladen werden und es kommen so wenig bewegliche Teile wie möglich zum Einsatz, sodass der Container möglichst wartungsfrei ist.

Weiters bevorzugt kann der Ausleger auch in eine Stellung gebracht werden, in welcher er im Wesentlichen parallel zum Gleitbock vorliegt. In dieser Stellung soll der Ausleger zudem arretierbar sein, damit er nicht unbeabsichtigt auf die Fahrspur ragt, wenn das Fahrzeug auf diese auffährt. Es handelt sich hierbei somit um eine "Ruhestellung" des Auslegers, welche auch beim Transport ohne Fahrzeug eingenommen werden kann. Hierbei ist weiters bevorzugt, wenn der Ausleger mit einem ersten Ende am Gleitbock gelagert ist und an einem zweiten Ende einen Greifer mit einer bevorzugt im Wesentlichen U-förmigen Aufnahme aufweist. Der Greifer setzt für viele Anwendungen bereits ein hinreichendes Arretieren um, da keine bzw. nur geringe Kräfte auf diesen einwirken werden, sodass der Sicherungsbolzen in der Ruhestellung nicht zwingend in eines der Löcher eingeführt werden muss. Es kann jedoch auch zusätzlich vorgesehen sein, dass der Sicherungsbolzen in der Ruhestellung in eines der Löcher eingeführt ist.

Besonders bevorzugt umfasst der Gleitbock des ersten Radstoppers mehr als zwei Löcher, sodass der Winkel zwischen 30° und 60° auch variiert werden kann. Dadurch kann sich der Ausleger beispielsweise in einem 90°-Winkel zum Gleitbock befinden, wenn sich der Sicherungsbolzen im ersten Loch befindet, in einem 40°-Winkel zum Gleitbock befinden, wenn sich der Sicherungsbolzen im zweiten Loch befindet und in einem 50°-Winkel zum Gleitbock befinden, wenn sich der Sicherungsbolzen in einem dritten Loch befindet. In anderen Worten kann der Gleitbock zumindest ein weiteres Loch aufweisen, bevorzugt zumindest drei weitere Löcher, in welches bzw. welche der Sicherungsbolzen einführbar ist, wobei sich das erste Loch, das zweite Loch und das zumindest eine weitere Loch (oder die zumindest drei weiteren Löcher) auf derselben Seite bezüglich der Lagerung des Auslegers am Gleitbock befinden. Auch wenn nur das erste und das zweite Loch vorliegen, befinden sich diese bevorzugt auf derselben Seite bezüglich der Lagerung des Auslegers am Gleitbock.

Je nach Anwendung kann der erste Radstopper auf unterschiedlichste Arten mit der Plattform, auf der das zu sichernde Fahrzeug steht, verbunden werden. Bevorzugt ist auf der Plattform jedoch eine Führungsschiene vorgesehen, wobei der Gleitbock verschieblich auf der Führungsschiene gelagert und an dieser arretierbar ist. Der Container umfasst bevorzugt somit die Führungsschiene, die z.B. permanent mit einem Boden oder einer Hochlagerebene des Containers verbunden ist, als auch den darauf gelagerten (und gegebenenfalls entfernbaren) Gleitbock mit Ausleger und Stützstrebe.

Bei der Führungsschiene ist besonders bevorzugt, wenn diese eine Vielzahl von Führungslöchern aufweist, in welche der Sicherungsbolzen einführbar ist, um den Gleitbock an der Führungsschiene zu arretieren. Damit kann der Sicherungsbolzen eine Doppelfunktion erfüllen, da er einerseits den Winkel des Auslegers einstellen kann, und andererseits den Gleitbock an der Führungsschiene arretieren kann. Alternativ könnte der Gleitbock auch durch andere Arten an der Führungsschiene arretiert werden, z.B. durch eine gesonderte Klemme.

Um das Einsetzen des Sicherungsbolzens in die Führungslöcher der Führungsschiene zu erleichtern, kann vorgesehen werden, dass die Führungslöcher eine Periodizität aufweisen, die gleich groß oder um ein ganzzahliges Vielfaches größer ist als die Periodizität der Löcher des Gleitbocks. Damit ist sichergestellt, dass das zweite Loch mit einem der Führungslöcher fluchtet, wenn das erste Loch mit einem der Führungslöcher fluchtet.

Der genannte zweite Radstopper ist bevorzugt derart ausgeführt, dass eine der Aufnahmeleisten O-förmige Ausnehmungen aufweist, welche von der Oberkante der Aufnahmeleiste beanstandet sind und die andere Aufnahmeleiste U-förmige Ausnehmungen aufweist, welche eine Oberkante der Aufnahmeleiste durchsetzen. Dadurch kann die Querstange in die O-förmige Ausnehmungen eingeschoben und in die in Betriebsstellung nach oben offenen U-förmigen Ausnehmungen eingelegt werden.

Zur semi-permanenten Arretierung kann weiter vorgesehen werden, dass die Querstange an einem Ende, bevorzugt an jenem Ende, das in die U-förmige Ausnehmung eingelegt wird, eine Auskragung aufweist, die an zumindest einer der Aufnahmeleisten arretierbar ist, bevorzugt mittels einer Schraube, eines Stifts oder eines Bolzens, die bzw. der durch gegengleiche Löcher in der Auskragung und der Aufnahmeleiste eingesetzt wird. Diese Variante kann auch eingesetzt werden, wenn beide Aufnahmeleisten O-förmige Ausnehmungen aufweisen, wobei das freie Ende der Querstange durch beide O-förmigen Ausnehmungen durchgeschoben wird, bis die Auskragung an einer der Aufnahmeleiten ansteht. Es versteht sich jedoch, dass die Querstange auch anders an den Aufnahmeleisten arretiert werden könnte.

Wie bereits eingangs erläutert ist der erste Radstopper insbesondere für den kombinierten Verkehr konzipiert, d.h. er soll sowohl für Transport von Fahrzeugen im Schienenverkehr als auch im Straßenverkehr geeignet sein. Bevorzugt ist hierbei, wenn der Radstopper zusammen mit dem Fahrzeug umgeschlagen wird. Hierfür können eigens konzipierte Container eingesetzt werden, die in ihren Maßen und in der Handhabung ISO-Containern gleichen, aber für den Fahrzeugtransport, insbesondere für den Transport von genau zwei Fahrzeugen übereinander, ausgebildet sind. Diese Container können zumindest zwei Fahrspuren zur Aufnahme eines Fahrzeuges aufweisen, und zumindest einen, bevorzugt zumindest zwei, der genannten ersten Radstopper umfassen. In dieser Ausführungsform wird die Führungsschiene in der Regel an einer Seite der Fahrspur vorliegen und beispielsweise unmittelbar neben der Fahrspur vorliegen. Besonders bevorzugt umfasst der Container weiters einen Boden mit zwei Fahrspuren und eine Hochlagerebene mit zwei Fahrspuren. Der Container weist bevorzugt vier Containerecken nach ISO 1161:2016 auf und/oder hat eine Länge von 20 Fuß bzw. 6,096 m, gemessen in einer Richtung parallel zu den Fahrspuren.

Weiters ist bevorzugt, wenn der Container vier Eckprofile aufweist, die sich vertikal vom Boden nach oben erstrecken, und wobei die Hochlagerebene an den vier Eckprofilen montiert ist, und wobei sich die Hochlagerebene bevorzugt an zwei der Eckprofilen an einer ersten Höhe über dem Boden befindet und an zwei der Eckprofilen an einer zweiten Höhe über dem Boden befindet, wobei die zweite Höhe geringer ist als die erste Höhe, wobei die erste Höhe besonders bevorzugt zwischen 1,5 m und 2,5 m beträgt und/oder wobei die zweite Höhe zwischen 0,3 m und 1,5 m beträgt. Dadurch kann das untere Fahrzeug weiterhin auf den Boden auffahren und mit einem niedrigeren, vorderen Ende unter die Hochlagerebene fahren.

Weiters kann sich genau ein Fahrzeug auf dem Boden befinden und sich genau ein Fahrzeug auf der Hochlagerebene befinden, wobei die beiden Fahrzeuge bevorzugt jeweils eine Länge von mindestens 60%, besonders bevorzugt eine Länge von zwischen 75% bis 95%, des Containers aufweisen, wobei die Fahrzeuge bevorzugt gegengleich auf dem Container angeordnet sind, sodass diese jeweils gegenüberliegenden Endseiten des Containers zugewandt sind. In anderen Worten ist der Container mit zwei Fahrzeugen maximal beladen und kann keine weiteren Fahrzeuge aufnehmen. Weiters ist eine hohe Ladedichte des 20-Fuß-Contianers gegeben.

In einer Variante könnte vorgesehen sein, dass die Hochlagerebene unlösbar an den Eckprofilen befestigt ist, z.B. verschweißt ist, was insbesondere dann sinnvoll ist, wenn bereits vorbekannt ist, mit welchem Typ von Fahrzeugen der Container beladen werden soll.

Damit der erfindungsgemäße Container mit möglichst vielen Fahrzeugtypen einsetzbar ist, könnte jedoch auch vorgesehen werden, dass eine höhenverstellbare Hochlagerebene vorgesehen wird. In anderen Worten können zumindest zwei, bevorzugt alle vier, Eckprofile einen Verstellmechanismus zur vertikalen Höhenverstellung der Hochlagerebene aufweisen. Dadurch kann die Hochlagerebene an die Höhe des auf dem Boden befindlichen Fahrzeugs angepasst werden, womit wiederum die Gesamthöhe des Systems so gering wie möglich gehalten wird. Dies ist insbesondere vorteilhaft, um ein vorbestimmtes Lichtraumprofil zu erreichen. Es sei jedoch erwähnt, dass dieser Verstellmechanismus nicht dazu eingesetzt wird, eine beladene Hochlagerebene anzuheben, sondern um die Höhe der Hochlagerebene bereits vor dem Beladen an zu beladene Fahrzeuge anzupassen. Insbesondere kann die Hochlagerebene mit keinem der beiden Enden am Boden bzw. an den Eckprofilen in Bodenhöhe positioniert werden. Der Verstellmechanismus ist derart ausgeführt, dass in allen Stellungen der Hochlagerebene die Enden der Hochlagerebene einen Abstand zum Boden von bevorzugt mindestens 30 cm oder mindestens 50 cm aufweisen. Der Verstellmechanismus kann beispielsweise durch mehrere in vertikaler Richtung voneinander beabstandete Löcher in den Eckprofilen (hierunter wird auch verstanden, dass eine Lochplatte oder dergleichen an einer Strebe des Eckprofiles befestigt ist, z.B. verschweißt ist) gebildet werden, die bevorzugt maximal 50 cm oder maximal 100 cm auseinanderliegen, um eine Höhenverstellbarkeit von z.B. maximal 50 cm oder maximal 100 cm zu erzielen.

Weiters kann der Container zumindest eine Stützstrebe umfassen, welche an einer Stelle an einer Längsseite bzw. Längsprofils des Bodens und an einer anderen Stelle mit der Hochlagerebene oder einem Eckprofil befestigt ist und an den beiden Stellen bevorzugt verschweißt ist. Hierdurch wird ein besonders robuster Container geschaffen, der über seine Lebensdauer nicht bzw. nur selten gewartet werden muss. Es versteht sich, dass Stützstreben, die mit der Hochlagerebene verbunden sind, bei einem Container keinen Sinn machen, deren Hochlagerebene im beladenen Zustand angehoben werden soll. Durch die Stützstreben kann das Gewicht des Containers reduziert werden, da die weiteren Elemente wie Längsprofile und Querprofile des Bodens mit geringerem Gewicht ausgeführt werden können.

Um Fahrzeuge auf die Hochlagerebene zu verbringen, kann der Container weiters eine Rampe umfassen bzw. mit einer Rampe kombiniert werden, welche an die Hochlagerebene ansetzbar ist. Dies ist insbesondere dann vorteilhaft, wenn die Hochlagerebene bereits gegenüber der horizontalen Ebene geneigt ist, da die Rampe dadurch an das tieferliegende Ende der Hochlagerebene ansetzen kann. Die Rampe soll eine derartige Länge aufweisen, dass diese von der Hochlagerebene bis zu einem ebenen Untergrund, auf dem der Container steht, reicht. In anderen Worten soll die Rampe eine Auffahrt eines Fahrzeugs vom Untergrund auf die Hochlagerebene ermöglichen.

Um die vorliegende Erfindung besser zu veranschaulichen und deren Funktionsweise detailliert zu erklären, wird im Folgenden auf die beigefügten Figuren Bezug genommen. Diese Abbildungen dienen der Verdeutlichung der technischen Merkmale der Erfindung. Die nachfolgende Beschreibung der Figuren soll dazu beitragen, die strukturellen und funktionalen Eigenschaften der Erfindung eingehend zu verstehen und deren Vorteile und technischen Fortschritte gegenüber dem Stand der Technik zu erläutern.
Figur 1 zeigt einen Container zur Lagerung von zwei Fahrzeugen in einer ersten Perspektivansicht.
Die Figuren 2a und 2b zeigen jeweils ein Detail der Figur 1.
Figur 3 zeigt den Container von Figur 1 in einer zweiten Perspektivansicht.
Die Figuren 4a und 4b zeigen jeweils ein Detail der Figur 1.
Figur 5 zeigt einen ersten (hinteren) Radstopper in einer ersten Stellung.
Figur 6 zeigt den ersten (hinteren) Radstopper in einer zweiten Stellung.
Figur 7 zeigt einen zweiten (vorderen) Radstopper.

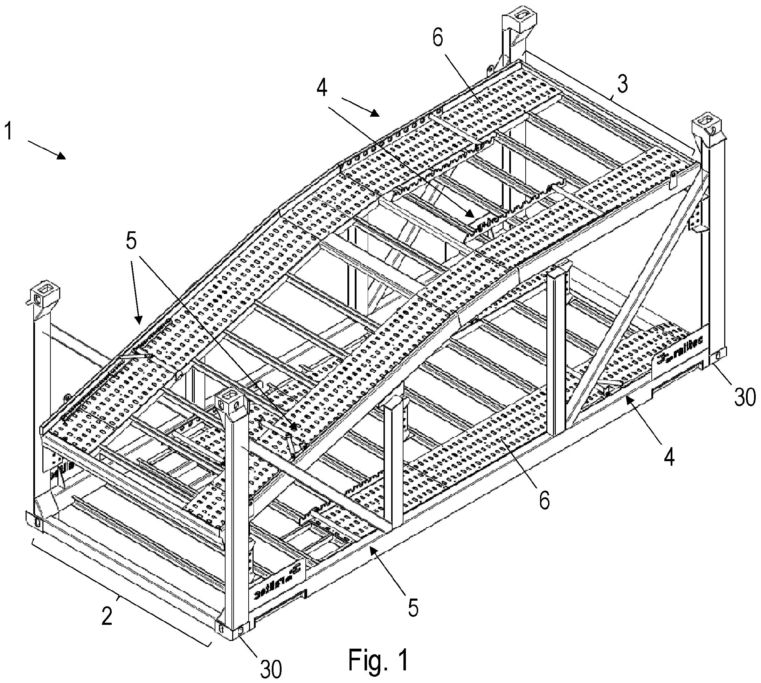

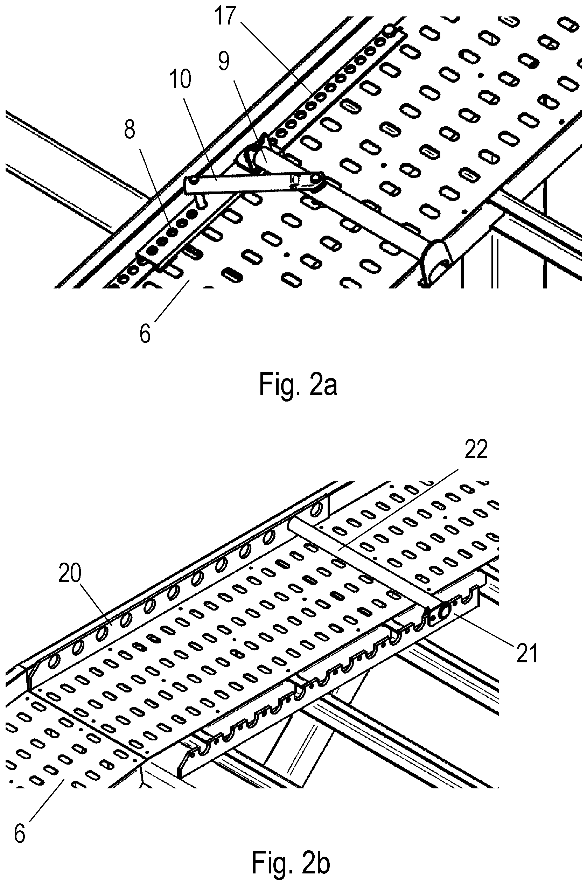

Die Figuren 1 bis 4b zeigen einen Container 1 zur Lagerung eines ersten Fahrzeugs auf einem Boden 2 und eines zweiten Fahrzeugs auf einer Hochlagerebene 3. Dieser Container 1 soll in seinen Maßen und in seiner Handhabung einem ISO-Container entsprechen, sodass dieser einerseits auf einem schienengebundenen Containertragwagen als auch auf einem Anhänger eines Lastkraftwagens transportiert werden kann. Der Boden 2 und die Hochlagerebene 3 weisen jeweils Fahrspuren 6 auf, damit die Fahrzeuge auf den Container 1 auffahren können. Die Fahrspuren 6 sind jeweils z.B. zumindest 40 cm breit und/oder maximal 100 cm breit. Da die Hochlagerebene 3 bei diesem Container nicht bis zum Boden absenkbar ist, kann eine zusätzliche Rampe bereitgestellt werden, sodass ein Fahrzeug über die Rampe auf die Hochlagerebene 3 auffahren kann.

Um die Fahrzeuge während des Transports in Position zu halten, werden auf den Fahrspuren 6 des Bodens 2 und auf den Fahrspuren 6 der Hochlagerebene 3 sogenannte Radstopper eingesetzt. Radstopper sind mechanische Vorrichtungen, die dazu dienen, das ungewollte Wegrollen von Fahrzeugrädern auf einer Plattform oder Fahrbahn zu verhindern.

Konkret wird ein vorderer (zweiter) Radstopper 4 vor einem Vorderrad des Fahrzeugs auf der Fahrspur 6 vorgesehen, der ein Nachvornefahren des Fahrzeugs verhindert. Weiters wird ein hinterer (erster) Radstopper 5 eingesetzt, der ein Nachhintenfahren des Fahrzeugs verhindert. Somit befinden sich auf jeder Fahrspur 6 des Containers 1 genau ein vorderer (zweiter) Radstopper 4 und genau ein hinterer (erster) Radstopper 5.

Der dargestellte Container 1 weist eine Länge von 20 Fuß auf, sodass genau ein Fahrzeug auf dem Boden 2 und ein Fahrzeug auf der Hochlagerebene 3 gelagert werden kann. Um das Fahrzeug auf den Boden oder auf die Hochlagerebene 3 zu verbringen, fährt dieses von einer Seite auf den Boden oder auf die Hochlagerebene auf. Hierfür befindet sich der hintere Radstopper 5 in einer Position, in der er die Fahrspur 6 freigibt. Das Fahrzeug kann somit mit dem Vorderrad bis zum vorderen Radstopper 4 vorfahren. Es ist ersichtlich, dass der vordere Radstopper 4 während des gesamten Beladevorgangs des Fahrzeugs in derselben Position verbleiben kann. Sobald das Fahrzeug mit dem Vorderrad bis zum vorderen Radstopper 4 vorgefahren ist, wird der hintere Radstopper 5 in Position gebracht, sodass dieser unmittelbar hinter dem Hinterrad des Fahrzeuges über die Fahrspur 6 ragt. Es sei angemerkt, dass "hinten" und "vorne" bezüglich der Einfahrrichtung des Fahrzeugs in den Container 1 gewählt sind.

Aus den vorstehenden Ausführungen kann erkannt werden, dass der vordere Radstopper 4 im Wesentlichen unbeweglich gewählt sein kann, wobei jedoch auch der vordere Radstopper 4 manchmal verstellt werden soll, z.B. wenn ein längeres Fahrzeug auf dem Container 1 gelagert werden soll. In der Regel wird jedoch immer derselbe Fahrzeugtyp auf dem Container 1 transportiert, sodass ein Verstellen des vorderen Radstoppers 4 nur selten notwendig ist. Der hintere Radstopper 5 soll hingegen mit einem schnell öffenbaren und schließbaren Mechanismus ausgestattet werden, um das Fahrzeug rasch zu fixieren und freizugeben. Weiters besteht die Anforderung an den hinteren Radstopper 5, dass dieser zwei verschiedene Stellungen einnehmen soll, um in einer ersten Stellung im Wesentlichen normal zur Fahrspur 6 zu liegen und um in einer zweiten Stellung das Fahrzeug gegen Querkräfte zu sichern.

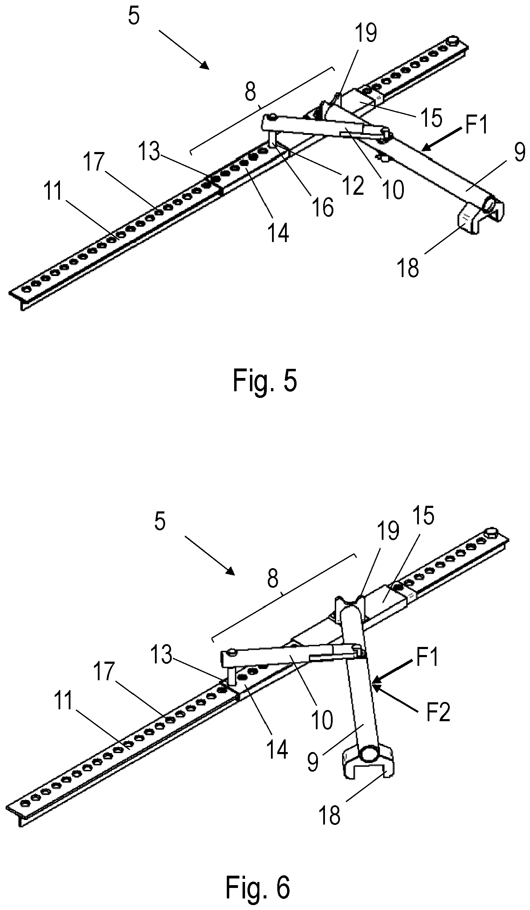

Figur 5 zeigt den hinteren Radstopper 5 in der ersten Stellung, in welcher er im Wesentlichen normal zur Fahrspur 6 liegt. Es ist ersichtlich, dass der hintere Radstopper 5 einen Gleitbock 8, einen Ausleger 9 und eine Stützstrebe 10 umfasst. Optional kann der Radstopper 4 auch die Führungsschiene 11 umfassen. Der Gleitbock 8 ist derart ausgeführt, dass er auf einer Führungsschiene 11 gelagert ist und auf dieser verschoben werden kann. Zu diesem Zweck kann der Gleitbock 8 eine U-förmige Aufnahme umfassen, welche die Führungsschiene 11 auf beiden Seiten umgreift, siehe die Figuren 5 und 6. Die Führungsschiene 11 kann unmittelbar neben der Fahrspur 6 vorgesehen werden und eine Länge aufweisen, innerhalb welcher das Hinterrad des Fahrzeugs erwartet wird. Die Führungsschiene 11 kann z.B. ein permanenter Bestandteil des Containers 1 sein und mit anderen Elementen des Containers 1 verschweißt sein.

Der Gleitbock 8 umfasst in der dargestellten Variante ein erstes Teil 14 mit Löchern (insbesondere einem ersten Loch 12 und einem zweiten Loch 13) und ein zweites Teil 15, an dem der Ausleger 9 verschwenkbar gelagert ist. Die beiden Teile 14, 15 können beispielsweise unlösbar miteinander verbunden sein, z.B. verschweißt sein. Es versteht sich jedoch, dass der Gleitbock 8 auch einstückig gefertigt sein kann.

Der Ausleger 9 ist ein längliches Element, z.B. eine Stange, und ist wie bereits erläutert mit einem Ende verschwenkbar am Gleitbock 8 angelenkt. Das zweite Ende des Auslegers 9 liegt frei vor und ist mit keinem statischen Element verbunden.

Die Stützstrebe 10 wird vorgesehen, um den Ausleger 9 in Position zu halten. Die Stützstrebe 10 ist ein längliches Element wie eine Stange und ist mit einem Ende am Ausleger 9 angelenkt. Im dargestellten Beispiel ist die Stützstrebe 10 an einer Stelle des Auslegers 9 angelenkt, die sich ca. in einem Abstand von einem Drittel der Länge des Auslegers 9 ausgehend vom angelenkten Ende des Auslegers 9 befindet. Die Stützstrebe 10 könnte aber auch an einer anderen Stelle des Auslegers 9 angelenkt sein, z.B. in der Mitte des Auslegers 9 oder am freien Ende des Auslegers 9.

An jenem Ende der Stützstrebe 10, das nicht am Ausleger 9 angelenkt ist, weist die Stützstrebe 10 einen Sicherungsbolzen 16 auf. Der Sicherungsbolzen 16 ist derart ausgeführt, dass er in das erste Loch 12 und das zweite Loch 13 eingeführt werden kann. Bevorzugt kann der Sicherungsbolzen 16 ohne Spiel in das erste Loch 12 und das zweite Loch 13 eingeführt werden.

Der Gleitbock 8, der Ausleger 9 und die Stützstrebe 10 sind derart ausgeführt, dass der Ausleger 9 wie in Figur 5 dargestellt in einem Winkel von im Wesentlichen 90° vom Gleitbock 8 absteht, wenn der Sicherungsbolzen 16 in das erste Loch 12 eingeführt ist und wie in Figur 6 gezeigt in einem Winkel von 40° vom Gleitbock 8 absteht, wenn der Sicherungsbolzen 16 in das zweite Loch 13 eingeführt ist.

Es ist ersichtlich, dass der Gleitbock 8 mehr als zwei Löcher 12, 13 hat, sodass der Sicherungsbolzen 16 auch in andere Löcher eingeführt werden kann, um in einem anderen Winkel vom Gleitbock abzustehen. Im Allgemeinen wird der Ausleger 9 in einem Winkel von 30° bis 90° vom Gleitbock abstehen, wenn er in eines der Löcher des Gleitbocks 8 eingesetzt wird, das nicht das erste Loch 12 ist. Da der Gleitbock 8 im dargestellten Beispiel neben dem ersten Loch 12 sechs weitere Löcher aufweist, kann der Ausleger 9 in sechs verschiedenen Winkeln vom Gleitbock 8 abstehen, die jeweils einen Wert von 30° bis 90° annehmen können.

Im dargestellten Beispiel erfüllt der Sicherungsbolzen 16 eine Doppelfunktion, da er einerseits in das erste Loch 12 oder das zweite Loch 13 eingesetzt werden kann, um den Abstehwinkel des Auslegers 9 von Gleitbock 8 vorzulegen. Andererseits kann der Sicherungsbolzen 16 jedoch auch in Löcher 17 der Führungsschiene 11 eingesetzt werden, d.h. sowohl das erste oder zweite Loch 12, 13 des Gleitbocks 8 als auch ein Loch 17 der Führungsschiene 17 durchsetzen. Indem der Sicherungsbolzen 16 ein Loch der Führungsschiene 11 durchsetzt, wird der Gleitbock 8 auf der Führungsschiene 11 arretiert, sodass der Gleitbock 8 nicht mehr entlang der Führungsschiene 11 verschoben werden kann.

Damit der Sicherungsbolzen 16 möglichst einfach auf der Führungsschiene 11 in Löcher 17 der Führungsschiene 11 eingeführt werden kann, sind die Löcher 17 gleich wie die Löcher 12, 13 des Gleitbocks ausgeführt, d.h. sie weisen denselben Durchmesser und dieselbe Form auf. Weiters sollen die Führungslöcher 17 der Führungsschiene 11 eine Periodizität aufweisen, die gleich groß oder um ein ganzzahliges Vielfaches größer ist als die Periodizität der Löcher des Gleitbocks 8. Im dargestellten Beispiel weisen die Löcher 12, 13 des Gleitbocks 8 und die Löcher 17 der Führungsschiene 11 dieselbe Form und Periodizität auf.

Im Allgemeinen kann der Gleitbock 8 jedoch mit einem beliebigen Mechanismus an der Führungsschiene 11 arretiert werden, oder auch mit einem anderen Mechanismus als einer Führungsschiene 11 an einem Teil des Containers 1 arretiert werden.

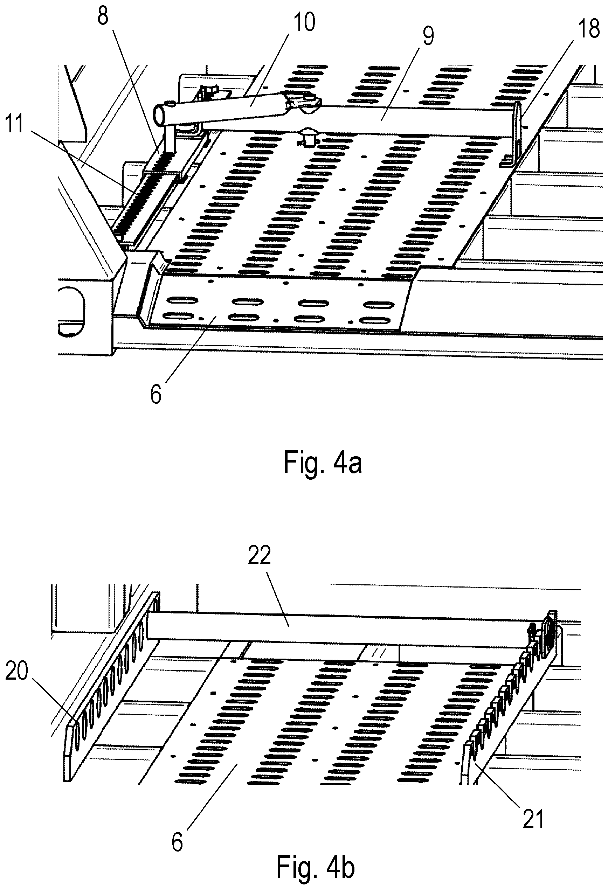

Der Ausleger 9 kann zudem parallel zum Gleitbock 8 bzw. zur Führungsschiene 11 ausgerichtet werden, sodass sich dieser in einer Stellung befindet, in welcher die Fahrspur 6 freigegeben wird. Hierfür kann der Ausleger 9 am freien Ende einen Greifer 18 mit einer bevorzugt im Wesentlichen U-förmigen Aufnahme aufweisen. Wenn der Ausleger 9 parallel zum Gleitbock 8 bzw. zur Führungsschiene 11 ausgerichtet ist, kann der Greifer 18 die Führungsschiene 11 umgreifen, wodurch verhindert wird, dass der Ausleger 9 unabsichtlich auf die Fahrspur 6 verschwenkt wird. In dieser Position kann der Sicherungsbolzen 16 gegebenenfalls in eines der Löcher des Gleitbocks 8 eingesetzt werden. An jenem Ende des Auslegers 9, das am Gleitbock 8 angelenkt ist, kann der Ausleger 9 zudem eine weitere U-förmige Aufnahme 19 aufweisen, in welche die Stützstrebe 10 eingelegt werden kann. Der Greifer 18 kann weiters dazu dienen, um den Ausleger in der ausgeklappten Position an der Fahrspur zu stützen (Figur 4a).

An dieser Stelle sei nochmals auf die unterschiedlichen Wirkungen des Auslegers in der Stellung der Figur 5 und der Figur 6 eingegangen. Aus Figur 5 ist ersichtlich, dass der Ausleger 9 eine von einem Rad des Fahrzeugs ausgeübte Kraft F1 aufnehmen kann, die im Wesentlichen parallel zur Fahrspur 6 verläuft. Aus Figur 6 ist ersichtlich, dass der Ausleger 9 von einem Rad des Fahrzeugs ausgeübte Kräfte F1, F2 aufnehmen kann, wobei die Kraft F1 parallel zur Fahrspur 6 verläuft und die Kraft F2 normal zur Fahrspur 6 verläuft. Diese normal zur Fahrspur 6 verlaufende Kraft F2 ist eine Querkraft, die z.B. während eines Transports auf einem Anhänger eines Lastkraftwagens durch Straßenunebenheiten auftreten kann und zu einem seitlichen Versetzen des transportierten Fahrzeugs führen würde, was durch den schräg gestellten Radstopper jedoch verhindert wird.

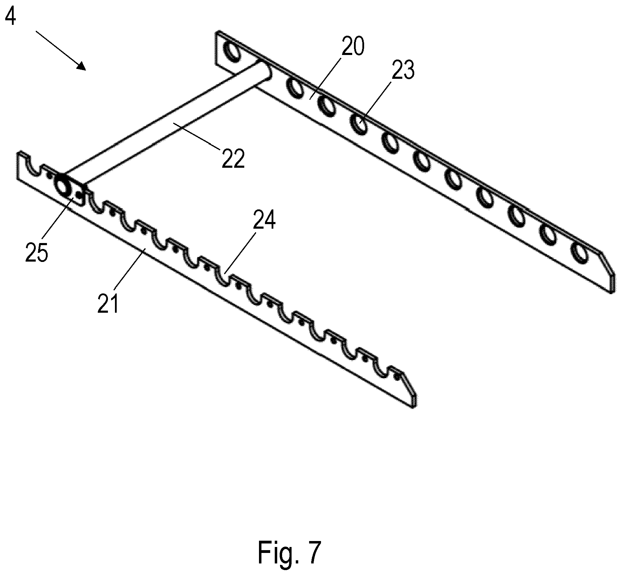

Figur 7 zeigt den vorderen Radstopper 4, der wie erwähnt semi-permanent vorgesehen werden kann, d.h. für einen Beladevorgang eines zu transportierenden Fahrzeugs im Wesentlichen unverändert bleiben kann, und nur zu einer Anpassung an eine andere Länge von zu transportierenden Fahrzeugen verstellt wird.

Der vordere Radstopper 4 umfasst eine erste Aufnahmeleiste 20, eine zweite Aufnahmeleiste 21 und eine Querstange 22, wobei die Aufnahmeleisten 20, 21 jeweils an gegenüberliegenden Seiten einer Fahrspur 6 vorliegen und diese bevorzugt links und rechts begrenzen. Die Querstange 22 ist mit einem ersten Ende an der ersten Aufnahmeleiste 20 und mit einem zweiten Ende an der zweiten Aufnahmeleiste 21 arretierbar. Hierfür können unterschiedliche Mechanismen eingesetzt werden, wobei der bevorzugte Mechanismus in Figur 7 dargestellt ist und im Folgenden erläutert wird.

Gemäß Figur 7 weist die erste Aufnahmeleiste 20 O-förmige Ausnehmungen 23 auf, welche von der Oberkante der ersten Aufnahmeleiste 20 beanstandet sind, d.h. die O-förmigen Ausnehmungen 23 sind rundum von der Aufnahmeleiste 20 begrenzt. Dadurch kann die Querstange 22 nur von der Seite in die O-förmigen Ausnehmungen 23 eingeschoben werden. Die zweite Aufnahmeleiste 21 weist hingegen U-förmige Ausnehmungen 24 auf, welche eine Oberkante der zweiten Aufnahmeleiste 21 durchsetzen. Dadurch bilden die U-förmigen Ausnehmungen 24 einen oberen Durchbruch der zweiten Aufnahmeleiste 21 und die Querstange 22 kann somit von oben in die U-förmigen Ausnehmungen 24 eingelegt werden. Um die Querstange 22 in die Aufnahmeleisten 20, 21 einzubringen, wird diese zuerst in die O-förmigen Ausnehmungen 23 eingesteckt und daraufhin in die U-förmigen Ausnehmungen 23 eingelegt.

Weiters weist die Querstange 22 an jenem Ende, das in die U-förmige Ausnehmung 24 eingelegt wird, eine Auskragung 25 auf, die mit der zweiten Aufnahmeleiste 21 verbindbar ist. Bevorzugt haben die zweite Aufnahmeleiste 21 und die Auskragung 25 hierfür gegengleiche Löcher, durch welche eine Schraube, ein Stift oder ein Bolzen geführt ist. Hierdurch ist die Querstange 22 in den beiden Aufnahmeleisten 20, 21 arretierbar.

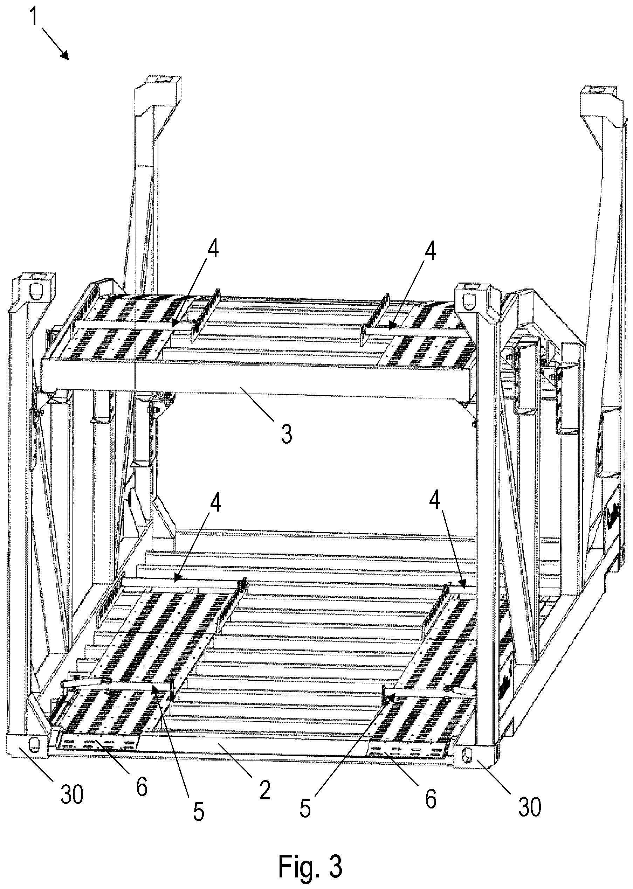

Zurückkommend auf die Figuren 1 und 3 ist ersichtlich, dass der Container 1 auf jeder Fahrspur 6 einen vorderen Radstopper 4 und einen hinteren Radstopper 5 aufweist. Pro Fahrzeug werden somit zwei vordere Radstopper 4 und zwei hintere Radstopper 5 eingesetzt. Die Führungsschiene 11 und die beiden Aufnahmeleisten 20, 21 sind hierbei in der Regel permanent an einem Teil des Containers 1 befestigt und der Gleitbock 8 mit dem Ausleger 9 und der Stützstrebe 10 bzw. die Querstange 22 stellen bewegliche Teile dar, die vom Rest des Containers 1 gelöst werden können.

Abschließend sei nochmals auf den Container 1 eingegangen, der in den Figuren 1 und 3 dargestellt ist. Dieser Container 1 weist an den vier unteren Ecken, d.h. an den Ecken des Bodens 2, Containerecken 30 auf, deren Spezifikationen beispielswiese der ISO 1161:2016 entsprechen. Damit können die Container 1 für den sogenannten kombinierten Verkehr (KV) eingesetzt werden, da sie einerseits auf schienengebundene Containertragwagen aufgesetzt werden können, der zu den Containerecken 30 komplementäre Containerzapfen aufweist. Genauso können die Container 1 durch deren genormte Eigenschaften aber auch auf Lastkraftwagen oder Schiffe verladen werden.

Um die Hochlagerebene 3 über dem Boden 2 zu lagern, weist der Container 1 vier Eckprofile auf, die sich vertikal vom Boden 2 nach oben erstrecken, sodass die Hochlagerebene 3 an den Eckprofilen montiert werden kann. Wie dargestellt werden die Eckprofile an den Containerecken 30 des Bodens 2 vorgesehen. Die Eckprofile können beispielswiese Streben mit einem rechteckigen oder einem L-förmigen Querschnitt sein. Die Eckprofile können beispielsweise mit dem Boden 2 und der Hochlagerebene 3 verschweißt sein.

Bei dem dargestellten Container 1 befindet sich die Hochlagerebene 3 in allen Betriebszuständen über dem Boden 2, sodass eine Rampe eingesetzt werden muss, um die Fahrzeuge auf die Hochlagerebene 3 zu verbringen. Selbst wenn die Hochlagerebene 3 höhenverstellbar ist, soll damit nur die Höhe der Hochlagerebene 3 adjustiert werden, um diese an die Höhe eines darunter befindlichen Fahrzeugs anzupassen, jedoch nicht, um ein Fahrzeug anzuheben.

Die Führungsschiene 11 und die Aufnahmeleisten 20, 21 sind auf Elementen des Containers 1 befestigt, insbesondere unlösbar befestigt z.B. angeschweißt. Nur die Querstange 22 und das Konstrukt aus Gleitbock 8, Ausleger 9 und Stützstange 10 sind lose und vom Rest des Containers 1 entfernbar.

Es sei angemerkt, dass auch konstruktive Umgestaltungen möglich sind, die in den Figuren nicht dargestellt sind. Beispielsweise könnte die Querstange 22 derart lange sein, dass diese zwei nebeneinanderliegende Fahrspuren 6 überdeckt. In dieser Variante würden die beiden Vorderräder eines Fahrzeugs an derselben Querstange 22 gehalten werden.

## Patentansprüche

1. Container (1) mit zumindest zwei Fahrspuren (6) zur Aufnahme eines Fahrzeuges, **dadurch gekennzeichnet, dass** der Container (1) zumindest einen, bevorzugt zumindest zwei, erste Radstopper (5) und zumindest einen, bevorzugt zumindest zwei, zweite Radstopper (4) zur Sicherung von Fahrzeugen auf den Fahrspuren (6) umfasst, wobei auf zumindest einer oder zumindest zwei der Fahrspuren (6) genau ein erster Radstopper (5) und genau ein zweiter Radstopper (4) vorliegt,
- wobei der zumindest eine erste Radstopper (5) einen Gleitbock (8) mit zumindest einem ersten Loch (12) und einem zweiten Loch (13), einen am Gleitbock (8) veschwenkbar gelagerten Ausleger (9) und eine Stützstrebe (10) umfasst, wobei die Stützstrebe (10) mit einem Ende verschwenkbar am Ausleger (9) gelagert ist und am anderen Ende einen Sicherungsbolzen (16) aufweist, der in das erste Loch (12) und in das zweite Loch (13) einführbar ist, wobei der Ausleger (9) in einem Winkel von im Wesentlichen 90° vom Gleitbock (8) absteht, wenn der Sicherungsbolzen (16) in das erste Loch (12) eingeführt ist und in einem Winkel von 30° bis 60° vom Gleitbock (8) absteht, wenn der Sicherungsbolzen (16) in das zweite Loch (13) eingeführt ist, und
- wobei der zumindest eine zweite Radstopper (4) zwei Aufnahmeleisten (20, 21) und eine Querstange (22) umfasst, wobei die Aufnahmeleisten (20, 21) jeweils an gegenüberliegenden Seiten einer Fahrspur (6) vorliegen, und wobei die Querstange (22) mit einem ersten Ende an einer der Aufnahmeleisten (20) und mit einem zweiten Ende an der anderen Aufnahmeleiste (21) arretierbar ist.

2. Container (1) nach Anspruch 1, wobei der Ausleger (9) in eine Stellung verbringbar und in dieser arretierbar ist, in welcher der Ausleger (9) im Wesentlichen parallel zum Gleitbock (8) liegt.

3. Container (1) nach Anspruch 1 oder 2, wobei der Ausleger (9) mit einem ersten Ende am Gleitbock (8) gelagert ist und an einem zweiten Ende einen Greifer (18) mit einer bevorzugt im Wesentlichen U-förmigen Aufnahme aufweist.

4. Container (1) nach einem der vorangegangenen Ansprüche, wobei der Gleitbock (8) zumindest ein weiteres Loch aufweist, bevorzugt zumindest drei weitere Löcher aufweist, in welches der Sicherungsbolzen (16) einführbar ist, wobei sich das erste Loch (12), das zweite Loch (13) und das weitere Loch auf derselben Seite bezüglich der Lagerung des Auslegers (9) am Gleitbock (8) befinden.

5. Container (1) nach einem der vorangegangenen Ansprüche, ferner umfassend zumindest eine Führungsschiene (11), wobei der Gleitbock (8) verschieblich auf der Führungsschiene (11) gelagert und an dieser arretierbar ist, wobei die Führungsschiene (11) bevorzugt eine Vielzahl von Führungslöchern (17) aufweist, in welche der Sicherungsbolzen (16) einführbar ist, um den Gleitbock (8) an der Führungsschiene (11) zu arretieren.

6. Container (1) nach einem der vorangegangenen Ansprüche, wobei eine der Aufnahmeleisten (20) O-förmige Ausnehmungen (23) aufweist, welche von der Oberkante der Aufnahmeleiste (20) beanstandet sind und die andere Aufnahmeleiste (21) U-förmige Ausnehmungen (24) aufweist, welche eine Oberkante der Aufnahmeleiste (21) durchsetzen.

7. Container (1) nach einem der vorangegangenen Ansprüche, wobei die Querstange (22) an einem Ende eine Auskragung (25) aufweist, die an zumindest einer der Aufnahmeleisten (20, 21) arretierbar ist, bevorzugt mittels einer Schraube, eines Stifts oder eines Bolzens, die bzw. der durch gegengleiche Löcher in der Auskragung (25) und der Aufnahmeleiste (20, 21) eingesetzt wird.

8. Container (1) nach einem der vorangegangenen Ansprüche, wobei der Container (1) vier Containerecken (30) nach ISO 1161:2016 aufweist.

9. Container (1) nach einem der vorangegangenen Ansprüche, wobei der Container (1) eine Länge von 20 Fuß (6,096 m) hat.

10. Container (1) nach einem der vorangegangenen Ansprüche, wobei der Container (1) einen Boden (2) mit zwei Fahrspuren (6) und eine Hochlagerebene (3) mit zwei Fahrspuren (6) umfasst, wobei bevorzugt auf jeder Fahrspur (6) des Bodens (2) und auf jeder Fahrspur (6) der Hochlagerebene (3) genau ein erster Radstopper (5) und genau ein zweiter Radstopper (4) vorliegt.

11. Container (1) nach Anspruch 10, wobei der wobei der Container (1) bevorzugt vier Eckprofile aufweist, die sich vertikal vom Boden (2) nach oben erstrecken, und wobei die Hochlagerebene (3) an den vier Eckprofilen montiert ist, und wobei sich die Hochlagerebene (3) bevorzugt an zwei der Eckprofilen an einer ersten Höhe über dem Boden (2) befindet und an zwei der Eckprofilen an einer zweiten Höhe über dem Boden (2) befindet, wobei die zweite Höhe geringer ist als die erste Höhe, wobei die erste Höhe besonders bevorzugt zwischen 1,5 m und 2,5 m beträgt und/oder wobei die zweite Höhe zwischen 0,3 m und 1,5 m beträgt.

12. Container (1) nach Anspruch 10 oder 11, wobei sich genau ein Fahrzeug auf dem Boden (2) befindet und sich genau ein Fahrzeug auf der Hochlagerebene (3) befindet, wobei die beiden Fahrzeuge bevorzugt jeweils eine Länge von mindestens 60%, besonders bevorzugt eine Länge von zwischen 75% bis 95%, des Containers (1) aufweisen, wobei die Fahrzeuge bevorzugt gegengleich auf dem Container (1) angeordnet sind, sodass diese jeweils gegenüberliegenden Endseiten des Containers (1) zugewandt sind.

13. Container (1) nach einem der Ansprüche 10 bis 12, wobei die Hochlagerebene (3) unlösbar an den Eckprofilen befestigt ist, oder wobei zumindest zwei, bevorzugt alle vier, Eckprofile einen Verstellmechanismus zur vertikalen Höhenverstellung der Hochlagerebene (3) aufweisen, wobei die Verstellmechanismen derart ausgeführt sind, dass in allen Stellungen der Hochlagerebene (3) die Enden der Hochlagerebene (3) einen Abstand zum Boden (2) von bevorzugt mindestens 30 cm oder mindestens 50 cm aufweisen.

14. Container (1) nach einem der Ansprüche 10 bis 13, umfassend zumindest eine Stützstrebe, welche an einer Stelle an einer Längsseite des Bodens (2) und an einer anderen Stelle mit der Hochlagerebene (3) oder einem Eckprofil befestigt ist und an den beiden Stellen bevorzugt verschweißt ist.

15. Container (1) nach einem der Ansprüche 10 bis 14, wobei der Container (1) weiters eine Rampe umfasst, welche an die Hochlagerebene (3) ansetzbar ist, wobei die Rampe bevorzugt eine derartige Länge aufweist, dass diese von der Hochlagerebene (3) bis zu einem ebenen Untergrund, auf dem der Container (1) steht, reicht.
